# EUROPÄISCHE PATENTANMELDUNG

(11) **EP 2 383 416 A2**
(43) Veröffentlichungstag der Anmeldung: **02.11.2011**
(21) Anmeldenummer: 11405205.3
(22) Anmeldetag: 24.01.2011
(51) Int. Cl.: E06B 9/68, E06B 9/90

(54) **Storenmotor und Steuerverfahren für Storenmotor**

(30) Priorität: 27.04.2010 CH 6052010
(71) Anmelder: Griesser Holding AG, 8355 Aadorf (CH)
(72) Erfinder: Winzeler, Markus, 8353 Elgg (CH)
(74) Vertreter: Gachnang, Hans Rudolf

(57) **Zusammenfassung**

Der Storenmotor (1') umfasst eine Steuerelektronik (11), welche Signale an drei Steuereingängen (5a, 5b, 5c) erfasst und verarbeitet. Abhängig von diesen Steuersignalen wählt die Steuerelektronik (11) jeweils den geeigneten Betriebsmodus aus. Der Storenmotor (1') kann sich ohne manuelle Konfiguration autonom zur Verwendung in einem Drei-Endschalter Betriebsmodus und einem Bus-Betriebsmodus einstellen.

## Beschreibung

Gegenstand der Erfindung ist ein Storenmotor und ein Steuerverfahren für einen Storenmotor gemäss dem Oberbegriff der Patentansprüche 1 und 3.

Beschattungsvorrichtungen wie Jalousien bzw. Rafflamellenstoren, Rollladen, Markisen und dergleichen können wahlweise mittels Handkurbeln manuell oder alternativ mittels Elektromotoren angetrieben werden. Die elektrischen Antriebe können abhängig von den jeweiligen Anforderungen Kleinspannungsmotoren umfassen, die mit Gleichstrom oder Wechselstrom betrieben werden, oder Niederspannungsmotoren, welche direkt durch die einphasige Netzspannung in einem Gebäude gespeist werden können. Bei Storen im Aussenbereich werden verbreitet 230VAC-Motoren verwendet. Diese umfassen in der Regel zwei oder drei Steuereingänge. Jedem dieser Steuereingänge ist ein Endschalter zugeordnet. Liegt eine Steuerspannung am ersten dieser Steuereingänge an, so wird der Behang vollständig hochgefahren bzw. geöffnet. Sobald die Tragschiene bzw. die untere Endschiene des Behangs die obere Endlage erreicht, wird der zugeordnete erste Endschalter geöffnet und die Stromzufuhr zum Motor unterbrochen. In analoger Weise wird der Behang beim Anlegen einer Steuerspannung an den zweiten oder den dritten Steuereingang heruntergefahren. Die Schaltpositionen des zweiten und dritten Endschalters sind so eingestellt bzw. einstellbar, dass die Unterbrechung der Stromzufuhr zum Motor durch den zweiten Endschalter erfolgt, sobald die Tragschiene eine erste untere Absenkposition (auch AB1-Position genannt) erreicht hat, welche wenig oberhalb der tiefst möglichen Absenklage der Tragschiene liegt, bzw. sobald die entsprechende Drehlage der Antriebswelle des Motors erreicht wird. Der Schaltpunkt des dritten Endschalters liegt bei der tiefst möglichen Absenklage der Tragschiene (auch AB2-Position genannt) und ist somit gegenüber der AB1-Position des zweiten Endschalters in Absenkdrehrichtung leicht versetzt. Bei Rafflamellenstoren, die über eine Arbeitsstellung verfügen (beim Absenken des Behangs werden die Lamellen in einer Zwischenlage zwischen der Offenstellung und der Schliessstellung gehalten), wird beim Erreichen der ersten unteren Absenkposition eine Wendevorrichtung zum Schwenken der Lamellen mit der Antriebswelle des Motors gekuppelt. Beim Weiterdrehen des Motors werden die Lamellen zwischen der AB1- und der AB2-Position von der Arbeitsstellung in die Schliessstellung verschwenkt und somit vollständig geschlossen.
Die Ansteuerung von Storenmotoren mit zwei oder drei Endschaltern kann z.B. mittels lokal im Bereich der Storen angeordneten Druckschaltern als Bedienelementen erfolgen. Solche Druckschalter sind mit dem spannungsführenden Leiter des Stromnetzes verbunden und so ausgebildet, dass dieser gleichzeitig jeweils nur mit einem der Steuereingänge des Motors verbunden werden kann. Zusammen mit einer Motorsteuerung kann der Motor einer Store nicht nur lokal mittels Bedientasten gesteuert werden, sondern z.B. auch zentral und/oder gruppenweise in Kombination mit weiteren Motoren. Noch flexibler sind Anordnungen mit busfähigen Komponenten, welche von einer zentralen Steuerung direkt adressiert und konfiguriert werden können. Bei busfähigen Motorsteuerungen kann die Steuerung von Storen mittels Bus-Befehlen erfolgen. Es sind auch Storenmotoren bekannt, bei denen eine oder mehrere Sollpositionen für den Behang mittels Referenzwerten für einen Zähler vorgegeben und in einem Speicher der Motorsteuerung hinterlegt werden können. Beim Drehen des Motors erzeugt ein Drehgeber Pulse, welche zum Inkrementieren und Dekrementieren des Zählers entsprechend des jeweiligen Drehsinns des Motors benutzt werden. Ausgehend von einer vorgebbaren Referenzposition wie beispielsweise der Drehlage des Motors bei vollständig geöffnetem Behang können so beliebige Sollpositionen wie z.B. die Ab1-Position und die Ab2-Position vorgegeben und angefahren werden.

Eine Aufgabe der vorliegenden Erfindung ist es, einen Storenmotor zu schaffen, der sowohl für den herkömmlichen Betrieb mit drei durch Endschalter oder andere Vorgabemittel einstellbaren Sollpositionen als auch für den Bus-Betrieb geeignet ist. Eine weitere Aufgabe der Erfindung besteht darin, ein Steuerverfahren für diesen Storenmotor anzugeben, welches einen einfachen Wechsel zwischen dem zeitgesteuerten Positionierbetrieb mit vorgebbaren Sollpositionen und dem Bus-Betrieb mit zusätzlichen absoluten Positionen ermöglicht.

Diese Aufgaben werden gelöst durch einen Storenmotor und durch ein Steuerverfahren für diesen Storenmotor gemäss den Merkmalen der Patentansprüche 1 und 3.

Anhand einiger Figuren wird die Erfindung im Folgenden näher beschrieben. Dabei zeigen
- Figur 1: eine schematische Darstellung eines mit einem Bedienteil verbundenen Storenmotors mit drei Endschaltern gemäss Stand der Technik,
- Figur 2: eine schematische Darstellung eines Storenmotors mit autonomer Betriebsmodusumschaltung.

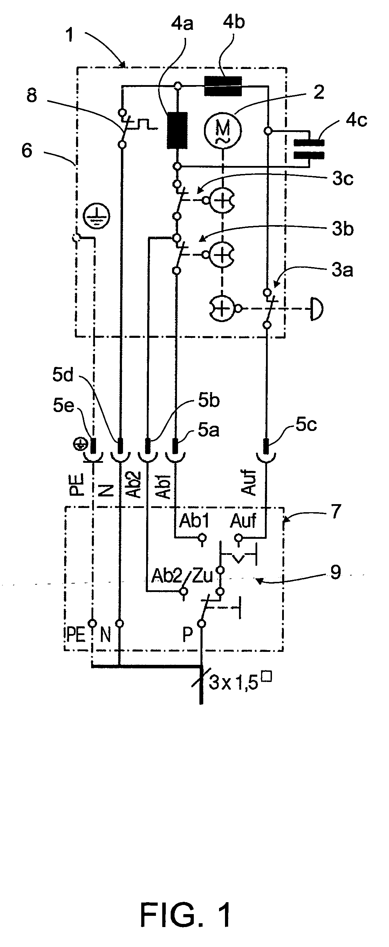

Figur 1 zeigt einen Storenmotor 1 mit einem Elektromotor 2 und drei Endschaltern 3a, 3b, 3c gemäss Stand der Technik. Der Storenmotor 1 umfasst als Schnittstelle einen Anschlussstecker mit fünf Kontakten 5a, 5b, 5c, 5d, 5e, wobei der letztgenannte Kontakt 5e mit einer Abschirmung 6 des Motorgehäuses verbunden ist. Der Anschlussstecker ist mit einer korrespondierenden Anschlusskupplung verbunden, welche eine ausgangsseitige Schnittstelle eines Bedienteils 7 ist und fünf Kontakte umfasst. Diese sind - entsprechend der Reihenfolge beim Anschlussstecker - mit "Ab1", "Ab2", "Auf", "N" und "PE" bezeichnet. Das Bedienteil 7 ist eingangsseitig mit dem Phasenleiter P, dem Nullleiter N und dem Erdleiter PE des Niederspannungsnetzes verbunden und umfasst eine Schalteranordnung 9, mit welcher der Phasenleiter P jeweils ausschliesslich mit jedem der drei Steuerausgänge "Ab1", "Ab2", "Auf" verbindbar ist.
Der Elektromotor 2 ist im dargestellten Beispiel ein Kondensatormotor bzw. ein einphasig betreibbarer Asynchronmotor mit zwei Statorwicklungen 4a, 4b, deren eine Seite über einen thermischen Schutzschalter 8 und den Kontakt 5d mit dem Nullleiter N des Stromnetzes verbindbar bzw. verbunden ist. Die beiden anderen Anschlüsse der Statorwicklungen 4a, 4b sind über einen Kondensator 4c miteinander verbunden. Der Kontakt 5a wird zum Anfahren der Ab1-Position benutzt und ist über die Kontakte der beiden seriell miteinander verbundenen Endschalter 3b und 3c unterbrechbar direkt mit der ersten Statorwicklung 4a des Elektromotors 2 verbunden. Der Kontakt 5b wird zum Anfahren der Ab2-Position benutzt und ist nur über den Endschalter 3c unterbrechbar mit der ersten Statorwicklung 4a verbunden. Die Schaltpunkte der beiden Endschalter 3b und 3c für die unteren Endpositionen sind einstellbar. Der Kontakt 5c wird zum Anfahren der Auf-Position benutzt und ist über den Kontakt des Endschalters 3a unterbrechbar mit der zweiten Statorwicklung 4b des Elektromotors 2 verbunden. Der Endschalter 3a kann z.B. durch einen Auflaufhebel geschaltet werden, wobei der Kontakt unterbrochen wird, wenn der Behang die Offenstellung erreicht. Durch Serieschaltung des Kondensators 4c mit der ersten Statorwicklung 4a oder der zweiten Statorwicklung 4b werden ergeben sich bei den beiden Statorwicklungen entgegengesetzte Phasenverzögerungen, welche die Drehrichtung des Elektromotors 2 vorgeben.

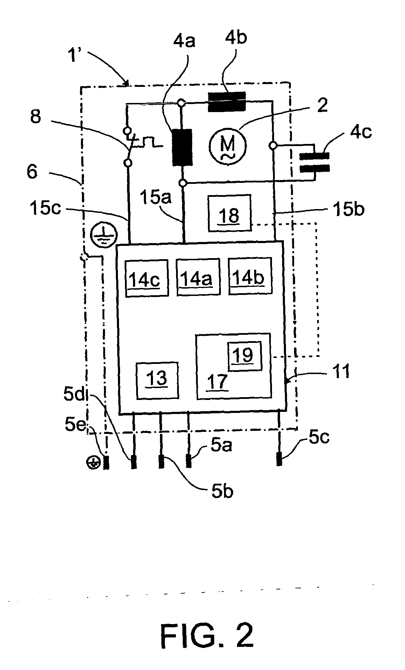

Figur 2 zeigt eine schematische Darstellung eines Storenmotors 1' gemäss der vorliegenden Erfindung. Die Schnittstelle mit den Kontakten 5a, 5b, 5c, 5d, 5e entspricht jener des bekannten Storenmotors 1 gemäss Figur zu 1. Der erfindungsgemässe Storenmotor 1' umfasst eine Steuerelektronik 11. Die Steuerelektronik 11 ist eingangsseitig mit den Kontakten 5a, 5b, 5c und 5d verbunden und umfasst ein Netzteil 13, welches aus der angeschlossenen Netzwechselspannung die zur Speisung der Elektronik erforderliche Kleinspannung erzeugt. Dabei kann die Phase der Netzspannung über jeden der drei Kontakte 5a, 5b, 5c dem Netzteil 13 zugeführt werden. Die drei Kontakte sind z.B. mittels Gleichrichtern voneinander entkoppelt (nicht dargestellt). Ausgangsseitig ist die Steuerelektronik 11 über drei Leitungen 15a, 15b, 15c mit den drei Anschlüssen des Elektromotors 2 verbunden. Die Steuerung 11 umfasst Relais oder andere elektronische Schaltglieder 14a, 14b, mit denen die beiden Leitungen 15a und 15b von der Steuerung 11 kontrolliert mit dem Phasenleiter P verbindbar sind. Vorzugsweise ist auch die Verbindung der Leitung 15c mit dem Nullleiter N über ein solches Schaltglied 14c unterbrechbar. Die Steuerelektronik 11 umfasst eine Verarbeitungseinrichtung 17, welche die Signalpegel an den drei eingangsseitigen Steuerkontakten 5a, 5b, 5c erfasst, verarbeitet und die ausgangsseitigen Schaltglieder 14a, 14b, 14c kontrolliert. Die Verarbeitungseinrichtung 17 kann zur Erfassung und Verarbeitung weiterer Eingangsgrössen ausgebildet sein. Bei der Ausführungsform gemäss Figur 2 ist ein Drehgeber 18, der proportional zur Motordrehung Impulse erzeugt, wirkungsmässig mit der Verarbeitungseinrichtung 17 verbunden (dargestellt durch unterbrochene Linie). Ein Zähler wird abhängig von der jeweiligen Drehrichtung der Motorwelle durch diese Impulse inkrementiert bzw. dekrementiert. Referenz- und Sollpositionen für die Drehlage der Motorwelle bzw. den Behang können durch vorgebbare Werte in einem Speicher 19 der Verarbeitungseinrichtung 17 gespeichert und mit dem jeweiligen Zählerstand verglichen werden. Zum Vorgeben der der Referenzpositionen resp. Endlagen wird die Steuerelektronik 11 in einen Einstellmodus für Endlagen versetzt, indem z.B. an den beiden Steuereingängen 5b und 5c für "Ab2" und "Auf" gleichzeitig temporär z-B, während etwa einer Sekunde ein 230VAC-Steuersignal angelegt wird. Anschliessend kann der Behang in die gewünschte Referenzlage verfahren werden, indem nur noch einer der Steuereingänge 5b, 5c zum Herunterfahren bzw. zum Hochziehen mit dem Steuersignal beaufschlagt wird. Durch eine Bestätigung, beispielsweise durch zweimaliges kurzzeitiges Anlegen der Steuerspannung an den entsprechenden Steuereingang 5c für "Auf", kann der aktuelle Zählerwert bei dieser Drehlage der Motorwelle als neuer, im vorliegenden Fall oberer Endlagenwert gespeichert werden. Alternativ kann auch der aktuelle Zählerstand als Referenzwert übernommen werden. In analoger Weise kann auch der Vergleichs- oder Sollwert für die Ab2-Position des Behangs gespeichert werden. Vorzugsweise ist der Vergleichswert, der in der Steuerelektronik 11 die Ab1-Position definiert, ein werkseitig voreingestellter, gespeicherter Referenzwert.

Ein grundlegender Gedanke der Erfindung ist es, den Storenmotor 1' aufgrund von Eingangsgrössen an einem oder mehreren der Steuerkontakte 3a, 3b, 3c automatisch für unterschiedliche Einsatzarten zu konfigurieren. Der erfindungsgemässe Storenmotor 1' kann sich bei einer ersten bevorzugten Ausführungsform aufgrund eines Steuersignals am Steuereingang 5a für "Ab1" automatisch für einen Bus-Betriebsmodus und einen Drei-Endschalter-Betriebsmodus konfigurieren. Dies wird anhand der nachfolgenden Tabelle 1 kurz erläutert.

**Tabelle 1**

| Ref.-Wert für AB1 | Steuereingänge | | | Reaktion |
|---|---|---|---|---|
| | 5a(AB1) | 5b(AB2) | 5c(AUF) | |
| eingelernt | 230VAC | - | - | Falls innerhalb t1 kein Empfang eines Telegramms Fahrt in AB1 |
| eingelernt | 230VAC | BUS V- | BUS V+ | Nach Telegramm-Empfang: |
| | | | | BUS-Betrieb |
| gelöscht | 230VAC | - | - | BUS-Betrieb |
| gelöscht | 230VAC | BUS V- | BUS V+ | BUS-Betrieb |
| egal | 230VAC | 230VAC | 230VAC | Keine |
| egal | 230VAC | 230VAC | - | Keine |
| egal | 230VAC | - | 230VAC | Keine |
| egal | - | 230VAC | 230VAC | Endlagen - Einstellmodus |
| egal | - | 230VAC | - | Fahrt in AB2 |
| egal | - | - | 230VAC | Fahrt in ESO |
| egal | - | - | - | Keine |

In der ersten Kolonne ist der Speicher-Status des Referenzwertes für die Ab1-Position angegeben, in den Spalten 2 bis 4 die Eingangsgrössen an den Steuereingängen 5a, 5b, und 5c und in der letzten Spalte die Reaktion der Steuerelektronik 11 bei der angegebenen Konstellation der Eingangsgrössen.
Der Steuereingang 5a (Ab1) wird verzögert verarbeitet. Kann die Verarbeitungseinrichtung 17 bei eingelerntem bzw. aktiviertem Referenzwert für Ab1 innerhalb einer Verzögerungszeit t1 von z.B. einer Sekunde nach dem Anlegen einer Steuerspannung an den Steuereingang 5a kein Telegramm empfangen, wählt sie den Normalbetriebsmodus und fährt den Behang in die Ab1-Position. Trifft innerhalb der Verzögerungszeit t1 jedoch ein Telegramm ein, so wird anschliessend in den Bus-Betriebsmodus umgeschaltet, wobei die Steuereingänge 5b und 5c als Signalleitungen für den Bus genutzt werden. Der Referenzwert für Ab1 wird gelöscht. Bei gelöschtem Referenzwert für Ab1 ist der Storenmotor 1' im Bus-Betrieb, falls nur am Steuereingang 5a ein 230VAC-Steuersignal anliegt, nicht jedoch an einem oder beiden der weiteren Steuereingänge 5b, 5c. Ein 230VAC-Steuersignal am Steuereingang 5b fährt den Behang in die Ab2-Position, ein 230VAC-Steuersignal am Steuereingang 5c fährt den Behang in die obere Endlage. Liegt sowohl am Steuereingang 5b als auch am Steuereingang 5c ein 230VAC=Steuersignal an" so wechselt die Steuerelektronik 11 in einen Einstellmodus zum vorgeben der Endlagen.
Eine weitere Ausführungsform des Storenmotors 1', ist aus nachfolgender Tabelle 2 ersichtlich.

**Tabelle 2**

| Ref.-Wert für AB1 | Steuereingänge | | | Reaktion |
|---|---|---|---|---|
| | 5c(AUF) | 5a(AB1) | 5b(AB2) | |
| egal | 230VAC | - | - | Falls innerhalb t1 kein Empfang eines Telegramms Fahrt in AUF |
| egal | 230VAC | BUS V- | BUS V+ | Nach Telegramm-Empfang: |
| | | | | BUS-Betrieb |
| egal | 230VAC | 230VAC | 230VAC | Keine |
| egal | 230VAC | 230VAC | - | Keine |
| egal | 230VAC | - | 230VAC | Endlagen - Einstellmodus |
| egal | - | 230VAC | 230VAC | Keine |
| egal | - | 230VAC | - | Fahrt in AB1 |
| egal | - | - | 230VAC | Fahrt in AB2 |
| egal | - | - | - | Keine |

Bei dieser Ausführungsform wird der Behang somit bei Ausbleiben eines Telegramms geöffnet. Dies ist vorteilhaft, falls z.B. der Bus unterbrochen ist.

## Patentansprüche

1. Storenmotor (1') zum Verfahren eines Behangs zwischen einer Offenstellung und einer Schliessstellung, umfassend drei Steuereingänge (5a, 5b, 5c) und Mittel zum Vorgeben einer oder mehrerer Sollpositionen für den Behang, **dadurch gekennzeichnet, dass** die Speisung einer Steuerelektronik (11) über einen oder mehrere der Steuereingänge (5a, 5b, 5c) erfolgt, dass Steuersignale an den Steuereingängen (5a, 5b, 5c) von der Steuerelektronik (11) erfassbar und mit einer Verarbeitungseinrichtung (17) zu Steuergrössen für einen Elektromotor (2) verarbeitbar sind, und dass der Betriebsmodus der Steuerelektronik (11) anhand der Steuersignale an den Steuereingängen (5a, 5b, 5c) automatisch veränderbar ist.

2. Storenmotor (1') nach Anspruch 1, **dadurch gekennzeichnet, dass** ein erster Betriebsmodus ein Drei-Endschalter-Betriebsmodus ist, und dass ein weiterer Betriebsmodus eine Ansteuerung mittels Bustelegrammen erlaubt.

3. Steuerverfahren für einen Storenmotor (1') nach einem der Ansprüche 1 oder 2, **dadurch gekennzeichnet, dass** die Steuerelektronik (11) über einen oder mehrere der Steuereingänge (5a, 5b, 5c) gespeist wird und den jeweils anzuwendenden Betriebsmodus autonom anhand der Steuersignale an den Steuereingängen (5a, 5b, 5c) ermittelt.

4. Steuerverfahren nach Anspruch 3, **dadurch gekennzeichnet, dass** die Steuerelektronik (11) im Falle eines vorgegebenen Signals an einem der Steuereingänge (5a, 5b, 5c) die Signale an einem oder mehreren der Steuereingänge (5a, 5b, 5c) während einer Verzögerungszeit t1 erfasst und auswertet, und dass die Steuerelektronik (11) die Verarbeitung der erfassten Signale entsprechend der erfassten Signale in mindesten zwei unterschiedlichen Arten ausführt.
